(19)

Europäisches
Patentamt
European
Patent Office
Office européen
des brevets

(11) **EP 2 871 265 A1**

(12) **EUROPEAN PATENT APPLICATION**
published in accordance with Art. 153(4) EPC

(43) Date of publication:
**13.05.2015 Bulletin 2015/20**

(21) Application number: **13813045.5**

(22) Date of filing: **01.07.2013**

(51) Int Cl.:
*C25B 9/00* (2006.01)     *C25B 1/04* (2006.01)
*C25B 3/04* (2006.01)     *C25B 9/10* (2006.01)
*C25B 11/08* (2006.01)    *C25B 15/02* (2006.01)

(86) International application number:
**PCT/JP2013/004069**

(87) International publication number:
**WO 2014/006872 (09.01.2014 Gazette 2014/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **03.07.2012 JP 2012149794**

(71) Applicant: **JX Nippon Oil & Energy Corporation
Chiyoda-ku
Tokyo 100-8162 (JP)**

(72) Inventors:
• **SATO, Yasushi
Tokyo 100-8162 (JP)**
• **MIYOSHI, Kota
Tokyo 100-8162 (JP)**
• **NAKAGAWA, Kojiro
Tokyo 100-8162 (JP)**
• **KOBORI, Yoshihiro
Tokyo 100-8162 (JP)**

(74) Representative: **Algemeen Octrooi- en
Merkenbureau B.V.
P.O. Box 645
5600 AP Eindhoven (NL)**

(54) **ELECTROCHEMICAL REDUCTION DEVICE AND PROCESS FOR PRODUCING PRODUCT OF HYDROGENATION OF AROMATIC HYDROCARBON COMPOUND OR NITROGENOUS HETEROCYCLIC AROMATIC COMPOUND**

(57)     In an aspect of the present invention, an electrolyte membrane 110 is formed by an ionomer. A reduction catalyst to be used in a reduction electrode 120 contains at least one of Pt and Pd. An oxygen evolving electrode 130 contains a catalyst based on a noble metal oxide such as $RuO_2$ or $IrO_2$. A hydrogen gas generation amount measuring unit 36 measures an amount of the hydrogen gas, circulating through piping 31 along with an aromatic hydrocarbon compound or a nitrogen-containing heterocyclic aromatic compound, so that a hydrogen gas generation amount F1 is calculated based on the measured amount. When the standard redox potential $V_{TRR}$ of an aromatic hydrocarbon compound or a nitrogen-containing heterocyclic aromatic hydrocarbon compound is represented by $V_{TRR}$, a potential in the reduction electrode 120 by $V_{CA}$, and an acceptable upper limit of a hydrogen gas generation amount by F0, the voltage between the reduction electrode 120 and the oxygen evolving electrode 130 is gradually increased within a range of $F1 \leq F0$ and $V_{CA} > V_{HER}$ - Acceptable Potential Difference; and when $F1 > F0$, electrode reactions are stopped.

FIG.1

**Description**

[TECHNICAL FIELD]

The present invention relates to a device and a method of electrochemically hydrogenating either an aromatic hydrocarbon compound or a nitrogen-containing heterocyclic aromatic compound.

[BACKGROUND ART]

It is known that a cyclic organic compound such as cyclohexane or decalin can be efficiently obtained by hydrogenating at least one benzene ring of a corresponding aromatic hydrocarbon compound (benzene or naphthalene) with the use of hydrogen gas. This reaction requires reaction conditions of high temperature and high pressure, and hence it is not suitable for small and medium scale manufacturing of cyclic organic compounds. It is also known that, on the other hand, an electrochemical reaction using an electrolysis cell proceeds without gaseous hydrogen being required and under relatively mild reaction conditions (from normal temperature to approximately 200°C and normal pressure) because water can be used as a hydrogen source.

[Related Art Documents]

[Patent Documents]

[Patent Document 1] JP 2003-045449
[Patent Document 2] JP 2005-126288
[Patent Document 3] JP 2005-239479

[Non-Patent Document]

[Non-Patent Document 1] Masaru Ichikawa, J. Jpn. Inst. Energy, vol. 85, 517 (2006)

[SUMMARY OF THE INVENTION]

[Problem to be Solved by the Invention]

As an example in which a benzene ring of an aromatic hydrocarbon compound such as toluene is electrochemically hydrogenated, a method is reported, in which toluene that is vaporized into a gaseous state is sent to the reduction electrode side to obtain methylcyclohexane, a benzene-ring hydrogenated substance (hydride), without going through a state of hydrogen gas in a configuration similar to that of water electrolysis (see Non-Patent Document 1) ; however, the amount of substance that can be transformed per electrode area or time (current density) is not large, and it has been difficult to industrially hydrogenate a benzene ring of an aromatic hydrocarbon compound.
The present invention has been devised in view of these situations, and a purpose of the invention is to provide a technique in which at least one benzene ring of an aromatic hydrocarbon compound or a nitrogen-containing heterocyclic aromatic compound can be surely and electrochemically hydrogenated at a high efficiency.

[Means for Solving the Problem]

An aspect of the present invention is an electrochemical reduction device. The electrochemical reduction device comprises: an electrolyte membrane having ion conductivity; an electrode unit including both a reduction electrode that is provided on one side of the electrolyte membrane and contains a reduction catalyst for hydrogenating at least one benzene ring of an aromatic hydrocarbon compound or a nitrogen-containing heterocyclic aromatic compound, and an oxygen evolving electrode provided on the other side of the electrolyte membrane; a power control unit that applies a voltage $V_a$ between the reduction electrode and the oxygen evolving electrode such that the reduction electrode has an electronegative potential and the oxygen evolving electrode has an electropositive potential; hydrogen gas generation amount measuring unit that measures a generation amount $F_1$ of hydrogen gas generated per unit time of an electrolysis reaction of water that competes with a hydrogenation reaction of at least one benzene ring of the aromatic hydrocarbon compound or the nitrogen-containing heterocyclic aromatic compound; and a control unit that releases, when the hydrogen gas generation amount $F_1$ is larger than an acceptable upper limit $F_0$ of a hydrogen gas generation amount in the electrode unit, the application of a voltage by the power control unit.

The electrochemical reduction device of the aforementioned aspect may further comprise : a reference electrode that is arranged to contact the electrolyte membrane and to be electrically isolated from the reduction electrode and the oxygen evolving electrode and that is held at a reference electrode potential $V_{Ref}$; and a voltage detection unit that detects a potential difference $\Delta V_{CA}$ between the reference electrode and the reduction electrode, in which the control unit may measures a potential $V_{CA}$ in the reduction electrode based on the potential difference $\Delta V_{CA}$ and the reference electrode potential $V_{Ref}$.

Another aspect of the present invention is an electrochemical reduction device. The electrochemical reduction device comprises: an electrolyte membrane having ion conductivity; an electrode unit assembly in which a plurality of electrode units are connected in series with each other, the each electrode unit including both a reduction electrode that is provided on one side of the electrolyte membrane and contains a reduction catalyst for hydrogenating at least one benzene ring of an aromatic hydrocarbon compound or a nitrogen-containing heterocyclic aromatic compound, and an oxygen evolving electrode provided on the other side of the electrolyte membrane; a power control unit that applies a voltage VA between a positive electrode terminal and a negative electrode terminal of the electrode unit assembly such that the reduction electrode of the each electrode unit has an electronegative potential and the oxygen evolving electrode thereof has an electropositive potential; hydrogen gas generation amount measuring device that measures, in the whole electrode units, a generation amount F1' of hydrogen gas generated per unit time of an electrolysis reaction of water that competes with a hydrogenation reaction of at least one benzene ring of the aromatic hydrocarbon compound or the nitrogen-containing heterocyclic aromatic compound; and a control unit that releases, when the hydrogen gas generation amount F1' is larger than an acceptable upper limit F0×N (wherein F0 represents an acceptable upper limit of a hydrogen gas generation amount per one of the electrode units, and N the number of the electrode units), the application of a voltage by the power control unit.

The electrochemical reduction device of the aforementioned aspect may further comprise: a reference electrode that is arranged to contact the electrolyte membrane of any one of the electrode units included in the electrode unit assembly and to be electrically isolated from the reduction electrode and the oxygen evolving electrode of the electrode unit; and a voltage detection unit that detects a potential difference $\Delta V_{CA}$ between the reference electrode and the reduction electrode of the electrode unit, in which the control unit may measure a potential $V_{CA}$ in the reduction electrode of the electrode unit based on the potential difference $\Delta V_{CA}$ and the reference electrode potential $V_{Ref}$.

Another aspect of the present invention is a method of manufacturing a hydride of an aromatic hydrocarbon compound or a nitrogen-containing heterocyclic aromatic compound. The method of manufacturing a hydride of an aromatic hydrocarbon compound or a nitrogen-containing heterocyclic aromatic compound comprises: using the electrochemical reduction device of any one of the aforementioned aspects; introducing an aromatic hydrocarbon compound or a nitrogen-containing heterocyclic aromatic compound into the reduction electrode side of the electrode unit; circulating water or humidified gas to the oxygen evolving electrode side; and producing a hydride of the aromatic hydrocarbon compound or the nitrogen-containing heterocyclic aromatic compound introduced into the reduction electrode side. In the manufacturing method of this aspect, the aromatic hydrocarbon compound or the nitrogen-containing heterocyclic aromatic compound to be introduced into the reduction electrode side may be introduced into the reduction electrode side in a liquid state at a reaction temperature.

Combinations of the aforementioned respective elements will also be within the scope of the present invention sought to be patented by the present patent application.

[Advantage of the Invention]

According to the present invention, at least one benzene ring of an aromatic hydrocarbon compound or a nitrogen-containing heterocyclic aromatic compound can be surely and electrochemically hydrogenated at a high efficiency.

[BRIEF DESCRIPTION OF THE DRAWINGS]

Fig. 1 is a schematic view illustrating a schematic configuration of an electrochemical reduction device according to Embodiment 1;
Fig. 2 is a view illustrating a schematic configuration of an electrode unit included in the electrochemical reduction device according to Embodiment 1;
Fig. 3 is a flowchart illustrating an example of potential control of a reduction electrode by a control unit in Embodiment 1;
Fig. 4 is a schematic view illustrating a schematic configuration of an electrochemical reduction device according to Embodiment 2; and
Fig. 5 is a view illustrating a specific example of a gas-liquid separation unit.

[BEST MODE FOR CARRYING OUT THE INVENTION]

Hereinafter, embodiments of the present invention will now be described with reference to the drawings. In the figures, like numerals represent like constituting elements and the description thereof will be appropriately omitted.

(Embodiment 1)

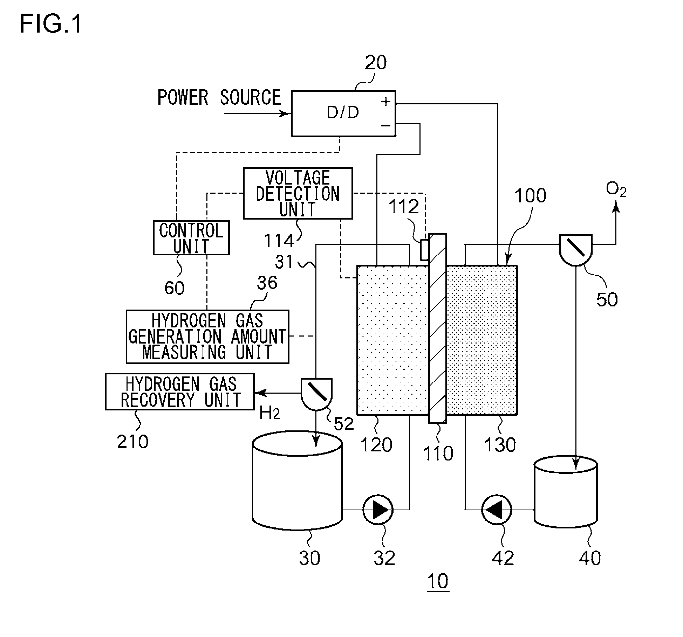

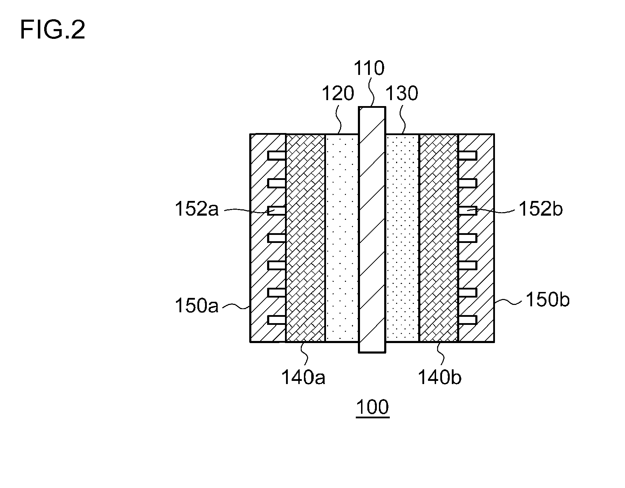

Fig. 1 is a schematic view illustrating a schematic configuration of an electrochemical reduction device 10 according to an embodiment. Fig. 2 is a view illustrating a schematic configuration of an electrode unit 100 included in the electrochemical reduction device 10 according to the embodiment. As illustrated in Fig. 1, the electrochemical reduction device 10 comprises: an electrode unit 100, a power control unit 20, an organic material storage tank 30, a hydrogen gas generation amount measuring unit 36, a water storage tank 40, a gas-water separation unit 50, a gas-liquid separation unit 52, a control unit 60, and a hydrogen gas recovery unit 210.
The power control unit 20 is, for example, a DC/DC converter for converting the output voltage of a power source into a predetermined voltage. A positive electrode output terminal of the power control unit 20 is connected to a positive electrode of the electrode unit 100. A negative electrode output terminal of the power control unit 20 is connected to a negative electrode of the electrode unit 100. Thereby, a predetermined voltage is applied between an oxygen evolving electrode (positive electrode) 130 and a reduction electrode (negative electrode) 120 of the electrode unit 100. A reference electrode input terminal of the power control unit 20 is connected to a reference electrode 112 provided on the later-described electrolyte membrane 110, and the potentials in the positive electrode output terminal and the negative electrode output terminal are determined based on the potential in the reference electrode 112, in accordance with a command of the control unit 60. As a power source, electrical power derived from natural energy such as sunlight and wind power can be used. A mode in which the potential control of the positive electrode output terminal and the negative electrode output terminal by the control unit 60 will be described later.
The organic material storage tank 30 stores an aromatic compound. The aromatic compound used in the present embodiment is an aromatic hydrocarbon compound or a nitrogen-containing heterocyclic aromatic compound, which contains at least one aromatic ring, and examples thereof include benzene, naphthalene, anthracene, diphenylethane, pyridine, pyrimidine, pyrazine, quinoline, isoquinoline, N-alkylpyrrole, N-alkylindole, N-alkyldibenzopyrrole, and the like. From one to four hydrogen atoms of an aromatic ring of any one of the aforementioned aromatic hydrocarbon compounds or nitrogen-containing heterocyclic aromatic compounds may be substituted by alkyl groups. However, the "alkyl" of any one of the aromatic compounds is a $C_{1-6}$ straight or branched alkyl group. For example, alkylbenzenes include toluene, ethyl benzene, and the like; dialkylbenzenes include xylene, diethylbenzene, and the like; and trialkyl benzenes include mesitylene and the like. Alkylnaphthalenes include methylnaphthalene and the like. An aromatic ring of any one of the aromatic hydrocarbons or nitrogen-containing heterocyclic aromatic compounds may have from 1 to 3 substituents. In the following description, the aromatic hydrocarbon compound and the nitrogen-containing heterocyclic aromatic compound to be used in the present invention may be referred to as "aromatic compounds". It is preferable that the aromatic compound is a liquid at room temperature. When a mixture of two or more of the aforementioned aromatic compounds is used, the mixture should be a liquid. Consequently, the aromatic compound can be supplied to the electrode unit 100 in a liquid state without being heated, pressurized, or the like, and hence the configuration of the electrochemical reduction device 10 can be simplified. The concentration of the aromatic hydrocarbon compound in a liquid state is 0.1% or more, preferably 0.3% or more, and more preferably 0.5% or more.
The aromatic compound stored in the organic material storage tank 30 is supplied to the reduction electrode 120 of the electrode unit 100 by a first liquid supply device 32. As the first liquid supply device 32, for example, various types of pumps such as a gear pump or a cylinder pump, or a gravity flow device or the like can be used. Instead of the aromatic compound, an N-substitution product of the aforementioned aromatic compound may be used. A circulation pathway is provided between the organic material storage tank 30 and the reduction electrode of the electrode unit 100, so that the aromatic compound, a hydride of which has been produced by the electrode unit 100, and an unreacted aromatic compound are stored in the organic material storage tank 30 after passing through the circulation pathway. Although gas is not generated in a main reaction that proceeds in the reduction electrode 120 of the electrode unit 100, hydrogen is generated by an electrolysis reaction of water that competes with a hydrogenating reaction of at least one benzene ring of an aromatic compound. In order to remove this hydrogen, the gas-liquid separation unit 52 is provided. The hydrogen gas separated by the gas-liquid separation unit 52 is housed in the hydrogen gas recovery unit 210. Also, the hydrogen gas generation amount measuring unit 36 is provided in piping 31 extending from the reduction electrode 120 to the organic material storage tank 30 and in the preceding stage of a gas-liquid separation unit 34. The hydrogen gas generation amount measuring unit 36 measures an amount of the hydrogen gas circulating through the piping 31 along with an aromatic compound. As the hydrogen gas generation amount measuring unit 36, for example, an optical sensor for optically detecting bubbles generated by the hydrogen gas, a pressure sensor for detecting the pressure in the piping 31, or the like, can be used. Information on the hydrogen gas generation amount, measured by the hydrogen gas generation amount measuring unit 36, is inputted to the control unit 60, so that a hydrogen gas generation amount F1 is calculated based on the information.

The water storage tank 40 stores ion-exchanged water, purified water, or the like (hereinafter, simply referred to as "water"). The water stored in the water storage tank 40 is supplied to the oxygen evolving electrode 130 of the electrode unit 100 by a second liquid supply device 42. As the second liquid supply device 42, for example, various types of pumps such as a gear pump or a cylinder pump, or a gravity flow device or the like can be used, similarly to the first liquid supply device 32. A circulation pathway is provided between the water storage tank 40 and the oxygen evolving electrode of the electrode unit 100, and the water that is unreacted in the electrode unit 100 is stored in the water storage tank 40 after passing through the circulation pathway. The gas-water separation unit 50 is provided in the middle of a pathway where the unreacted water is sent back to the water storage tank 40 from the electrode unit 100. By the gas-water separation unit 50, the oxygen generated by the electrolysis of water in the electrode unit 100 is separated from water and discharged to the outside the system.

As illustrated in Fig. 2, the electrode unit 100 includes the electrolyte membrane 110, the reduction electrode 120, the oxygen evolving electrode 130, liquid diffusion layers 140a and 140b, and separators 150a and 150b. In Fig. 1, the electrode unit 100 is illustrated in a simplified way in which the liquid diffusion layers 140a and 140b and the separators 150a and 150b are omitted.

The electrolyte membrane 110 is formed of a material (ionomer) having protonic conductivity, and inhibits substances from getting mixed or being diffused between the reduction electrode 120 and the oxygen evolving electrode 130 while selectively conducting protons. The thickness of the electrolyte membrane 110 is preferably from 5 to 300 $\mu$m, more preferably from 10 to 150 $\mu$m, and most preferably from 20 to 100 $\mu$m. If the thickness of the electrolyte membrane 110 is less than 5 $\mu$m, the barrier property of the electrolyte membrane 110 is deteriorated, so that cross-leaking is likely to occur. On the other hand, if the thickness thereof is more than 300 $\mu$m, ion transfer resistance becomes too large, which is not preferred.

The area resistance of the electrolyte membrane 110, that is, the ion transfer resistance per geometric area thereof is preferably 2000 m$\Omega$*cm$^2$ or less, more preferably 1000 m$\Omega$*cm$^2$ or less, and most preferably 500 m$\Omega$*cm$^2$ or less. If the area resistance of the electrolyte membrane 110 is more than 2000 m$\Omega$*cm$^2$, protonic conductivity becomes insufficient. Examples of the material having protonic conductivity (i.e., a cation-exchanging ionomer) include perfluorosulfonic acid polymers such as Nafion (registered trademark) and Flemion (registered trademark). The ion exchange capacity (IEC) of the cation exchange ionomer is preferably from 0.7 to 2 meq/g, and more preferably from 1 to 1.2 meq/g. If the ion exchange capacity thereof is less than 0.7 meq/g, ion conductivity becomes insufficient. On the other hand, if the ion exchange capacity of the cation exchange ionomer is more than 2 meq/g, the solubility of the ionomer in water is increased, and hence the strength of the electrolyte membrane 110 becomes insufficient.

On the electrolyte membrane 110, the reference electrode 112 is provided in an area spaced apart from the reduction electrode 120 and the oxygen evolving electrode 130 so as to contact the electrolyte membrane 110. That is, the reference electrode 112 is electrically isolated from the reduction electrode 120 and the oxygen evolving electrode 130. The reference electrode 112 is held at a reference electrode potential $V_{Ref}$. Examples of the reference electrode 112 include a standard hydrogen reduction electrode (reference electrode potential $V_{Ref} = 0$ V) and an Ag/AgCl electrode (reference electrode potential $V_{Ref} = 0.199$ V), but the reference electrode 112 is not limited thereto. The reference electrode 112 is preferably provided on the surface of the electrolyte membrane 110 on the reduction electrode 120 side.

A potential difference $\Delta V_{CA}$ between the reference electrode 112 and the reduction electrode 120 is detected by a voltage detection unit 114. The value of the potential difference $\Delta V_{CA}$ detected by the voltage detection unit 114 is inputted to the control unit 60.

The reduction electrode 120 is provided on one side of the electrolyte membrane 110. The reduction electrode 120 is a reduction electrode catalyst layer containing a reduction catalyst for producing a hydride of an aromatic compound. The reduction catalyst to be used in the reduction electrode 120 is not particularly limited, and is made, for example, of a metal composition that includes a first catalyst metal (noble metal) containing at least one of Pt and Pd, and one or more second catalyst metals selected from the group consisting of Cr, Mn, Fe, Co, Ni, Cu, Zn, Mo, Ru, Sn, W, Re, Pb, and Bi. The form of the metal composition is an alloy of the first catalyst metal and the second catalyst metals, or an intermetallic compound composed of the first catalyst metal and the second catalyst metals. The ratio of the first catalyst metal to the total mass of the first catalyst metal and the second catalyst metals is preferably from 10 to 95 wt%, more preferably from 20 to 90 wt%, and most preferably from 25 to 80 wt%. If the ratio of the first catalyst metal is less than 10 wt%, durability may be deteriorated in terms of resistance to dissolving, and the like. On the other hand, if the ratio of the first catalyst metal is more than 95 wt%, the properties of the reduction catalyst become closer to those of a noble metal alone, and hence the electrode activity becomes insufficient. In the following description, the first catalyst metal and the second catalyst metals may be collectively referred to as a "catalyst metal."

The aforementioned catalyst metal may be supported by a conductive material (support). The electrical conductivity of the conductive material is preferably $1.0 \times 10^{-2}$ S/cm or more, more preferably $3.0 \times 10^{-2}$ S/cm or more, and most preferably $1.0 \times 10^{-1}$ S/cm or more. If the electrical conductivity of the conductive material is less than $1.0 \times 10^{-2}$ S/cm, sufficient conductivity cannot be imparted. Examples of the conductive material include conductive materials containing any one of a porous carbon, a porous metal, and a porous metal oxide as a major component. Examples of the porous carbon include carbon black such as Ketjen black (registered trademark), acetylene black, and Vulcan (registered trademark). The BET specific surface area of the porous carbon measured by a nitrogen adsorption method is preferably 100 m$^2$/g or more, more preferably 150 m$^2$/g or more, and most preferably 200 m$^2$/g or more. If the BET specific surface area of the porous carbon is less than 100 m$^2$/g, it is difficult to uniformly support the catalyst metals. Accordingly, the rate of utilizing the surface of the catalyst metal is decreased, causing the catalyst performance to be deteriorated. Examples of the porous metal include, for example, Pt black, Pd black, a Pt metal deposited in a fractal shape, and the like. Examples of the porous metal oxide include oxides of Ti, Zr, Nb, Mo, Hf, Ta and W. Besides these, examples of the porous conductive material for supporting the catalyst metal include nitrides, carbides, oxynitrides, carbonitrides, partially-oxidized carbonitrides of metals such as Ti, Zr, Nb, Mo, Hf, Ta, and W (hereinafter, they are collectively referred to as porous metal carbonitrides and the like). The BET specific surface areas of the porous metal, the porous metal oxide, the porous metal carbonitrides and the like measured by a nitrogen adsorption method are preferably 1 m$^2$/g or more, more preferably 3m$^2$/g or more, and most preferably 10 m$^2$/g or more. If the respective BET specific surface areas of the porous metal, the porous metal oxide, the porous metal carbonitrides and the like are less than 1 m2/g, it is difficult to uniformly support the catalyst metals. Accordingly, the rate of utilizing the surface of the catalyst metal is decreased, causing the catalyst performance to be deteriorated.

Depending on the types and compositions of the first catalyst metal and the second catalyst metals, a simultaneous impregnation method, in which the first catalyst metal and the second catalyst metals are simultaneously impregnated with a support, or a sequential impregnation method, in which, after the first catalyst metal is impregnated with a support, the second catalyst metals are impregnated therewith, can be employed as a method for supporting the catalyst metal on the support. In the case of the sequential impregnation method, after the first catalyst metal is supported on a support, a heat treatment or the like may be performed once, followed by supporting the second catalyst metals on the support. After the impregnation of both the first catalyst metal and the second catalyst metals is completed, the first catalyst metal and the second catalyst metals are alloyed with each other or an intermetallic compound composed of the first catalyst metal and the second catalyst metals is formed by a heat treatment process.

To the reduction electrode 120, a material having conductivity, such as the aforementioned conductive oxide or carbon black, may be added separately from the conductive compound for supporting the catalyst metal. Consequently, the number of electron-conducting paths among reduction catalyst particles can be increased, and hence the resistance per geometric area of a reduction catalyst layer can be lowered in some cases.

The reduction electrode 120 may include, as an additive, a fluorine-based resin such as polytetrafluoroethylene (PTFE).

The reduction electrode 120 may contain an ionomer having protonic conductivity. The reduction electrode 120 preferably contains, at a predetermined mass ratio, an ionically conducting material (ionomer) having a structure that is identical or similar to that of the aforementioned electrolyte membrane 110. Thereby, the ion conductivity of the reduction electrode 120 can be improved. In particular, in the case where a catalyst support is porous, the reduction electrode 120 makes a significant contribution to the improvement of the ion conductivity by containing an ionomer that has protonic conductivity. Examples of the ionomer having protonic conductivity (i.e., a cation-exchanging ionomer) include perfluorosulfonic acid polymers such as Nafion (registered trademark) and Flemion (registered trademark). The ion exchange capacity (IEC) of the cation exchange ionomer is preferably from 0.7 to 3 meq/g, more preferably from 1 to 2.5 meq/g, and most preferably from 1.2 to 2 meq/g. When the catalyst metal is supported on porous carbon (carbon support), a mass ratio I/C of the cation-exchanging ionomer (I) to the carbon support (C) is preferably from 0.1 to 2, more preferably from 0.2 to 1.5, and most preferably from 0.3 to 1.1. If the mass ratio I/C is less than 0.1, it is difficult to obtain sufficient ion conductivity. On the other hand, if the mass ratio I/C is more than 2, the thickness of an ionomer coating over the catalyst metal is increased, and hence the contact of the aromatic compound, a reactant, with a catalyst-active site may be inhibited or the electrode activity may be decreased due to a decrease in the electron conductivity.

It is also preferable that the reduction catalyst is partially coated with the ionomer included in the reduction electrode 120. Thereby, three elements (aromatic compound, proton, electron), which are necessary for an electrochemical reaction in the reduction electrode 120, can be efficiently supplied to a reaction sites.

The liquid diffusion layer 140a is laminated on the surface of the reduction electrode 120 on the side opposite to the electrolyte membrane 110. The liquid diffusion layer 140a has a function of uniformly diffusing the liquid aromatic compound supplied from the later-described separator 150a to the reduction electrode 120. As the liquid diffusion layer 140a, for example, carbon paper or carbon cloth is used.

The separator 150a is laminated on the surface of the liquid diffusion layer 140a on the side opposite to the electrolyte membrane 110. The separator 150a is formed of a carbon resin, or a corrosion-resistant alloy such as Cr-

Ni-Fe, Cr-Ni-Mo-Fe, Cr-Mo-Nb-Ni, or Cr-Mo-Fe-W-Ni. One or more groove-like flow channels 152a are provided on the surface of the separator 150a on the liquid diffusion layer 140a side. The liquid aromatic compound supplied from the organic substance storage tank 30 circulates through the flow channel 152a, and the liquid aromatic compound penetrates into the liquid diffusion layer 140a from the flow channel 152a. The form of the flow channel 152a is not particularly limited, but for example, a straight flow channel or a serpentine flow channel can be employed. When a metal material is used for the separator 150a, the separator 150a may have a structure formed by sintering sphere-like or pellet-like metal fine powders.

The oxygen evolving electrode 130 is provided on the other side of the electrolyte membrane 110. For the oxygen evolving electrode 130, a material, including a catalyst based on a noble metal oxide such as $RuO_2$ or $IrO_2$, is preferably used. These catalysts may be supported in a dispersed manner or coated on a metal substrate such as a metal wire or mesh made of metals such as Cr, Mn, Fe, Co, Ni, Cu, Zn, Nb, Mo, Ta, and W or of alloys composed primarily of these metals. In particular, when $IrO_2$ is used as a catalyst, manufacturing costs can be reduced by coating the metal substrate with a thin film because $IrO_2$ is expensive.

The liquid diffusion layer 140b is laminated on the surface of the oxygen evolving electrode 130 on the side opposite to the electrolyte membrane 110. The liquid diffusion layer 140b has a function of uniformly diffusing the water supplied from the later-described separator 150b to the oxygen evolving electrode 130. As the liquid diffusion layer 140b, for example, carbon paper or carbon cloth is used.

The separator 150b is laminated on the surface of the liquid diffusion layer 140b on the side opposite to the electrolyte membrane 110. The separator 150b is formed of a corrosion-resistant alloy such as Cr/Ni/Fe, Cr/Ni/Mo/Fe, Cr/Mo/Nb/Ni, or Cr/Mo/Fe/W/Ni, or a material in which the surfaces of these metals are coated with an oxide layer. One or more groove-like flow channels 152b are provided on the surface of the separator 150b on the liquid diffusion layer 140b side. The water supplied from the water storage tank 40 circulates through the flow channel 152b, and the water penetrates into the liquid diffusion layer 140b from the flow channel 152b. The form of the flow channel 152b is not particularly limited, but for example, a straight flow channel or a serpentine flow channel can be employed. When a metal material is used for the separator 150b, the separator 150b may have a structure formed by sintering sphere-like or pellet-like metal fine powders.

In the present embodiment, liquid water is supplied to the oxygen evolving electrode 130, but a humidified gas (for example, air) may be used instead of liquid water. In this case, the dew-point temperature of the humidified gas is preferably from room temperature to 100°C, and more preferably from 50 to 100°C.

When toluene is used as the aromatic compound, reactions in the electrode unit 100 are as follows.

<Electrode Reaction at Oxygen Evolving Electrode>

$$3H_2O \rightarrow 1.5O_2 + 6H^+ + 6e^- : E_0 = 1.23 \text{ V}$$

<Electrode Reaction at Reduction Electrode>

$$\text{Toluene} + 6H^+ + 6e^- \rightarrow \text{methylcyClohexane} : E_0 = 0.153 \text{ V (vs RHE)}$$

In other words, the electrode reaction at the oxygen evolving electrode and that at the reduction electrode proceed in parallel, and protons generated by electrolysis of water occurring due to the electrode reaction at the oxygen evolving electrode is supplied to the reduction electrode via the electrolyte membrane 110, and used for producing a hydride of an aromatic compound in the electrode reaction at the reduction electrode.

Referring back to Fig. 1, the control unit 60 controls the power control unit 20 so as to satisfy the relationship of $V_{HER}$ - 20 mV $\leq V_{CA} \leq V_{TRR}$ (wherein $V_{HER}$ represents the potential in a reversible hydrogen electrode, and $V_{CA}$ represents the potential in the reduction electrode 120). If the potential $V_{CA}$ is lower than $V_{HER}$ - 20 mV, the hydrogenating (hydrogenating at least one benzene ring of aromatic compound) reaction becomes to compete with a hydrogen generation reaction, and hence the reduction selectivity of the aromatic compound becomes insufficient, which is not preferred. On the other hand, if the potential $V_{CA}$ is higher than the standard redox potential $V_{TRR}$, the hydride-producing reaction does not proceed at a practically sufficient rate, which is not preferred. In other words, by setting the potential $V_{CA}$ to be within the range that satisfies the aforementioned relational expression, electrochemical reactions can be made to proceed at both the electrodes, and the hydrogenating at least one benzene ring of the aromatic compound can be industrially practiced.

After the potential $V_{CA}$ is adjusted, the control unit 60 executes the processing for stopping electrode reactions at the reduction electrode 120 and the oxygen evolving electrode 130, when the hydrogen gas generation amount F1, measured by the hydrogen gas generation amount measuring unit 36, is larger than F0. Specifically, examples of the processing to be executed by the control unit 60 when F1 is larger than F0 include the processing for causing the voltage Va to be 0 instantaneously or in a stepwise fashion, or the processing for blocking the power supply from a power source to the power control unit 20 by providing an isolating switch in a power source line extending from the power source to the power control unit 20, and the like. Thus, by terminating the electrode reactions in a state where the hydrogen gas generation amount F1 is larger than the acceptable upper limit F0, that is, in a state where the Faraday efficiency is decreased, the Faraday efficiency can be maintained to be larger than or equal to a predetermined value while the electrode reactions are proceeding.

When the total current density flowing through the electrode unit 100 is represented by a current density A, and a current density used in the reduction of the aromatic compound, the current density being back-calculated from the generation amount of a hydride of the aromatic compound that has been quantitated by gas chromatography, etc., is represented by a current density B, the Faraday efficiency is calculated by the current density B/ the current density A × 100 (%).

Besides this, the following reaction conditions are employed for the production of a hydride of the aromatic compound using the electrochemical reduction device 10. The temperature of the electrode unit 100 is preferably from room temperature to 100°C, and more preferably from 40 to 80°C. If the temperature of the electrode unit 100 is lower than room temperature, the proceeding of the electrolytic reaction may be slowed down, or an enormous amount of energy is required to remove the heat generated as the main reaction proceeds, which is not preferred. On the other hand, if the temperature of the electrode unit 100 is higher than 100°C, water is brought to a boil at the oxygen evolving electrode 130 and the vapor pressure of an organic material is increased at the reduction electrode 120, which is not preferred for the electrochemical reduction device 10 in which reactions are performed in liquid phases at both the electrodes.

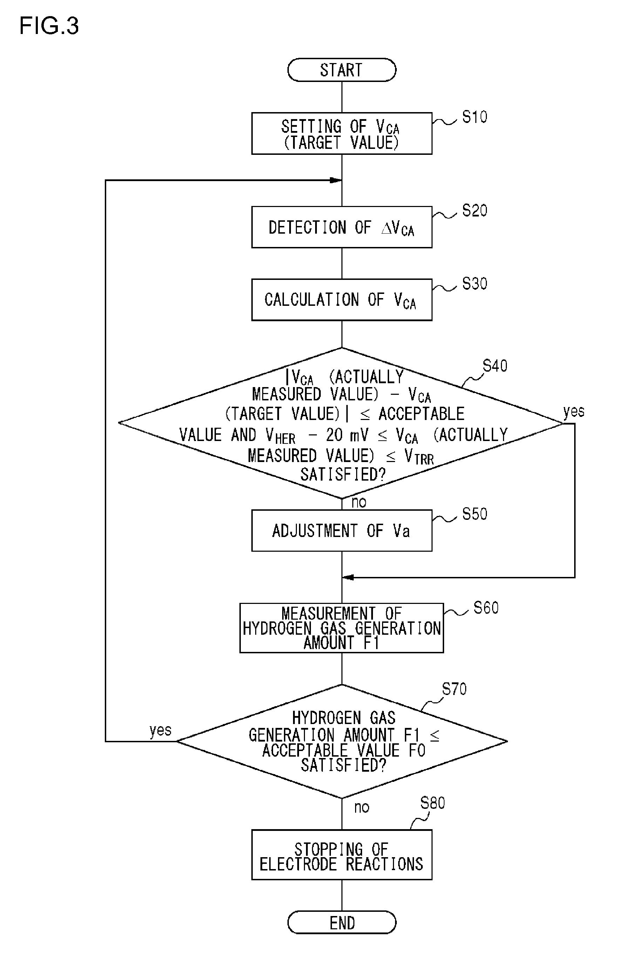

Fig. 3 is a flowchart illustrating an example of the potential control of the reduction electrode 120 performed by the control unit 60 of the present embodiment. The mode of performing the potential control of the reduction electrode 120 will be described below by using, as an example, a case where an Ag/AgCl electrode (reference electrode potential $V_{Ref}$ = 0.199 V) is used as the reference electrode 112.

The potential $V_{CA}$ (target value), which satisfies $V_{HER}$-an acceptable potential difference $\leq V_{CA} \leq V_{TRR}$, is first set (S10). The acceptable potential difference may be 20 mV. In an aspect, the potential $V_{CA}$ (target value) is a value that has been stored beforehand in a memory such as a ROM. In another aspect, the potential $V_{CA}$ (target value) is set by a user.

Subsequently, a voltage detection unit 114 detects a potential difference $\Delta V_{CA}$ between the reference electrode 112 and the reduction electrode 120 (S20).

Subsequently, the control unit 60 calculates a potential $V_{CA}$ (actually measured value) in the reduction electrode 120 by using (expression) $V_{CA} = \Delta V_{CA} - V_{Ref} = \Delta V_{CA} - 0.199$ V (S30).

Subsequently, it is determined whether the potential $V_{CA}$ (actually measured value) satisfies the following expressions (1) and (2) (S40).

$$|\text{Potential } V_{CA} \text{ (actually measured value)} - \text{Potential } V_{CA} \text{ (target value)}| \leq \text{Acceptable Value} \quad (1)$$

$$V_{HER} - \text{Acceptable Potential Difference} \leq V_{CA} \text{ (actually measured value)} \leq V_{TRR} \quad (2)$$

In the expression (1), the acceptable value is, for example, 1 mV.

When the potential $V_{CA}$ (actually measured value) satisfies the expressions (1) and (2), the processing proceeds to "yes" in S40 so as to proceed to the later-described S60. On the other hand, when the potential $V_{CA}$ (actually measured value) does not satisfy both the expressions (1) and (2), the processing proceeds to "No" in S40 so as to adjust the voltage Va to be applied between the reduction electrode 120 and the oxygen evolving electrode 130 (S50). After the adjustment of the voltage Va, the processing returns to the aforementioned S10.

Herein, an example of the adjustment of the voltage Va will be described. For example, when Potential $V_{CA}$ (actually measured value) - Potential $V_{CA}$ (target value) > Acceptable Value, the control unit 60 sends to the power control unit 20 a command requesting that the voltage Va is increased by only 1 mV. As a result of increasing the voltage Va, if $V_{CA}$ (actually measured value) < $V_{HER}$ - Acceptable Potential Difference even when |Potential $V_{CA}$ (actually measured value) - Potential $V_{CA}$ (target value) | ≤ Acceptable Value is satisfied, the expression (2) is not satisfied, and hence the control unit 60 causes the voltage Va to be further decreased by 1 mV in the next processing. Thus, the control unit 60 causes the voltage Va to be decreased in a stepwise fashion until the expressions (1) and (2) are finally satisfied.

On the other hand, when Potential $V_{CA}$ (actuallymeasured value) - Potential $V_{CA}$ (target value) < -Acceptable Value, the control unit 60 sends to the power control unit 20 a command requesting that the voltage Va is decreased by only 1 mV. As a result of decreasing the voltage Va, if $V_{CA}$ (actually measured value) > $V_{TRR}$ even when |Potential $V_{CA}$ (actually measured value) - Potential $V_{CA}$ (target value) | ≤ Acceptable Value is satisfied, the expression (2) is not satisfied, and hence the control unit 60 causes the voltage Va to be further increased by 1 mV in the next processing. Thus, the control unit 60 causes the voltage Va to be increased in a stepwise fashion until the expressions (1) and (2) are finally satisfied.

Herein, the value (adjustment range) by which the voltage Va is increased or decreased is not limited to 1 mV. For example, it may be acceptable that the adjustment range of the voltage Va is set to be comparable to the aforementioned acceptable value in the first round of the adjustment of the voltage Va and the adjustment range thereof is set to, for example, one-fourth of the aforementioned acceptable value in the second and subsequent rounds of the adjustment of the voltage Va. Thereby, the potential $V_{CA}$ (actually measured value) can be quickly adjusted to be within a range that satisfies the expressions (1) and (2).

After the voltage Va is adjusted in S50 or in the case of "yes" in S40, the hydrogen gas generation amount F1 is measured by the hydrogen gas generation amount measuring unit 36 (S60).

Subsequently, it is determined whether the hydrogen gas generation amount F1 is smaller than or equal to the acceptable upper limit F0 (S70). When the hydrogen gas generation amount F1 is smaller than or equal to the acceptable upper limit F0, the processing proceeds to "yes" in S70 so as to detect the potential difference $\Delta V_{CA}$ again (S20). On the other hand, when the hydrogen gas generation amount F1 is larger than the acceptable upper limit F0, the processing proceeds to "No" in S70 so as to stop the electrode reactions at the reduction electrode 120 and the oxygen evolving electrode 130.

(Embodiment 2)

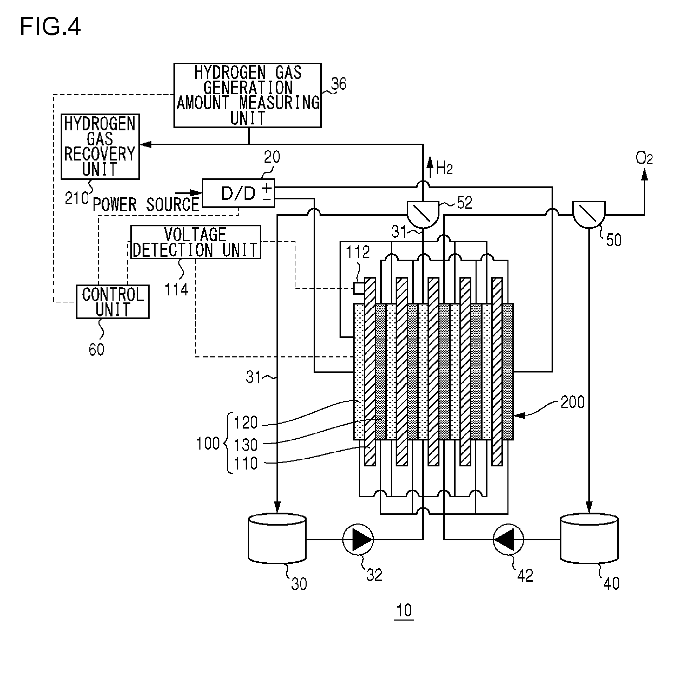

Fig. 4 is a schematic view illustrating a schematic configuration of an electrochemical reduction device 10 according to Embodiment 2. As illustrated in Fig. 4, the electrochemical reduction device 10 comprises: an electrode unit assembly 200, a power control unit 20, an organic material storage tank 30, a hydrogen gas generation amount measuring unit 36, a water storage tank 40, a gas-water separation unit 50, a gas-liquid separation unit 52, a control unit 60, a voltage detection unit 114, and a hydrogen gas recovery unit 210. The electrode unit assembly 200 has a laminate structure in which a plurality of electrode units 100 are connected in series with each other. In the present embodiment, the number of the electrode units 100 is 5; however, the number thereof is not limited thereto. Herein, each electrode unit 100 has the same configuration as that in Embodiment 1. In Fig. 4, the electrode unit 100 is illustrated in a simplified way in which liquid diffusion layers 140a and 140b and separators 150a and 150b are omitted.

A positive electrode output terminal of the power control unit 20 according to the present embodiment is connected to positive electrodes of the electrode unit assembly 200. On the other hand, a negative electrode output terminal of the power control unit 20 is connected to negative electrodes of the electrode unit assembly 200. Thereby, a predetermined voltage VA is applied between the positive electrode terminals and the negative electrode terminals of the electrode unit assembly 200, so that in each electrode units 100, a reduction electrode 120 has an electronegative potential and an oxygen evolving electrode 130 has an electropositive potential. Herein, a reference electrode input terminal of the power control unit 20 is connected to a reference electrode 112 provided on an electrolyte membrane 110 of the later-described specific electrode unit 100, so that the potentials in the positive electrode output terminal and the negative electrode output terminal are determined based on the potential in the reference electrode 112.

A first circulation pathway is provided between the organic material storage tank 30 and the reduction electrode 120 of each electrode unit 100. An aromatic compound stored in the organic material storage tank 30 is supplied to the reduction electrode 120 of each electrode unit 100 by a first liquid supply device 32. Specifically, the piping that forms the first circulation pathway is branched on the downstream side of the first liquid supply device 32, so that the aromatic compound is distributed and supplied to the reduction electrode 120 of each electrode unit 100. The aromatic compound, a hydride of which has been produced by each electrode unit 100, and an unreacted aromatic compound join together in the piping 31 communicating to the organic material storage tank 30, so that they are stored therein after passing through the piping 31. The gas-liquid separation unit 52 is provided in the middle of the piping 31, so that the hydrogen, circulating the inside of the piping 31, is separated by the gas-liquid separation unit 52.

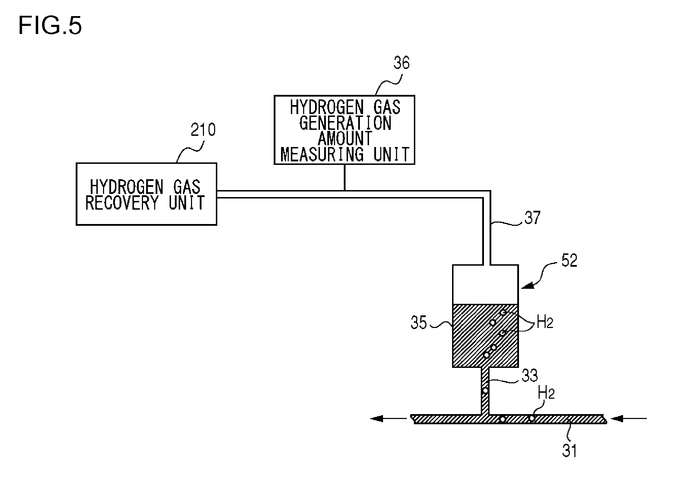

Fig. 5 is a view illustrating a specific example of the gas-liquid separation unit 52. A branch pipe 33, branching upwards from the piping 31, is provided. The branch pipe 33 is connected to the bottom of a liquid storage tank 35. A liquefied aromatic compound flows into the liquid storage tank 35 via the branch pipe 33, so that the liquid level in the liquid storage tank 35 is maintained at a predetermined level. The hydrogen gas, flowing through the piping 31 from the upstream side of the point where the branch pipe 33 is branched to the branch point along with the aromatic compound, reaches the liquid storage tank 35 after moving upwards through the branch pipe 33, and enters the gas phase above the liquid level in the liquid storage tank 35. The hydrogen gas in the gas phase is then recovered by the hydrogen gas recovery unit 210 via an exhaust pipe 37 connected to the upper portion of the liquid storage tank 35. The hydrogen gas generation amount measuring unit 36 is provided in the middle of the exhaust pipe 37 such that the hydrogen gas generation amount F1', generated from all the electrode units 100 included in the electrode unit assembly 200, is measured. In the present embodiment, the hydrogen gas generation amount measuring unit 36 is a flowmeter for detecting the amount of the hydrogen gas passing through the exhaust pipe 37. Herein, a constant amount of nitrogen gas may be supplied to the exhaust pipe 37 at the upstream of the hydrogen gas generation amount measuring unit 36. Thereby, a change in the concentration of the hydrogen gas flowing through the exhaust pipe 37 can be accurately detected.

In the aforementioned embodiment, a flowmeter is adopted as an example of the hydrogen gas generation amount measuring unit 36; however, the hydrogen gas generation amount measuring unit 36 is not limited thereto. For example, a mode can be adopted, in which a relief valve is installed in the exhaust pipe 37 as the hydrogen gas generation amount measuring unit 36. The relief valve is configured, for example, to open when the gas pressure in the exhaust pipe 37 on the upstream side thereof becomes larger than or equal to a preset value, and to close after a constant amount of the gas is discharged toward the downstream side of the relief valve. In this case, a signal, indicating that the relief valve is opened, is transmitted to the control unit 60 every time the relief valve is opened. The control unit 60 estimates a hydrogen gas generation amount based on both the amount of the gas discharged per one opening of the relief valve and the number of the openings of the relief valve per unit time.

In the present embodiment, the flow rate of the hydrogen gas separated by the gas-liquid separation unit 52 is measured by the hydrogen gas generation amount measuring unit 36; however, an optical sensor, similar to that in Embodiment 1, may be installed between the upstream side of the gas-liquid separation unit 52 and the downstream side of the point where the piping from the respective electrode units 100 join together. In addition, in Embodiment 1, a mode may be adopted as in Embodiment 3, in which the flow rate of the hydrogen gas separated by the gas-liquid separation unit 52 is measured by the hydrogen gas generation amount measuring unit 36.

A second circulation pathway is provided between the water storage tank 40 and the oxygen evolving electrode 130 of each electrode unit 100. The water stored in the water storage tank 40 is supplied to the oxygen evolving electrode 130 of each electrode unit 100 by the second liquid supply device 42. Specifically, piping that forms the second circulation pathway is branched on the downstream side of the second liquid supply device 42, so that water is distributed and supplied to the oxygen evolving electrode 130 of each electrode unit 100. The unreacted water in each electrode unit 100 joins together in the piping that communicates to the water storage tank 40, and then is stored in the water storage tank 40 after passing through the piping.

Alike Embodiment 1, a reference electrode 112 is provided on the electrolyte membrane 110 of a specific electrode unit 100 so as to contact the electrolyte membrane 110 in an area spaced apart from the reduction electrode 120 and the oxygen evolving electrode 130. The specific electrode unit 100 may be any one of the plurality of the electrode units 100.

A potential difference $\Delta V_{CA}$ between the reference electrode 112 and the reduction electrode 120 is detected by the voltage detection unit 114. The value of the potential difference $\Delta V_{CA}$ detected by the voltage detection unit 114 is inputted to the control unit 60.

When the potential in a reversible hydrogen electrode is represented by $V_{HER}$, the potential in the reduction electrode 120 by $V_{CA}$, an acceptable upper limit of the hydrogen gas generation amount per one electrode unit by F0, and the number of the electrode units 100 by N (in the present embodiment, N is 5), the control unit 60 controls the power control unit 20 so as to gradually increase the voltage VA within a range of F1' $\leq$ N $\times$ F0 and $V_{CA} > V_{HER}$ - Acceptable Potential Difference.

On the other hand, when F1' is larger than N $\times$ F0, the control unit 60 executes the processing for stopping the electrode reactions at the reduction electrode 120 and the oxygen evolving electrode 130. Specifically, examples of the processing to be executed by the control unit 60 when F1' is larger than N $\times$ F0 include the processing for causing the voltage VA to be 0 instantaneously or in a stepwise fashion, or the processing for blocking the power supply from a power source to the power control unit 20 by providing an isolating switch in a power source line extending from the power source to the power control unit 20, and the like. Thus, by terminating the electrode reactions in a state where the hydrogen gas generation amount F1' is larger than the acceptable upper limit N $\times$ F0, that is, in a state where the Faraday efficiency is decreased, the Faraday efficiency can be maintained to be larger than or equal to a predetermined value while the electrode reactions are proceeding in each electrode unit 100.

According to the present embodiment, the production of hydrides of an aromatic compound can be made to proceed in parallel in a plurality of the electrode units 100, and hence the generation amount of a hydride of an aromatic compound per unit time can be drastically increased. Accordingly, the production of a hydride of an aromatic compound can be industrially practiced.

The present invention is not limited to the aforementioned embodiments, and various modifications, such as a design change, can be added thereto based on knowledge of those skilled in the art, and any embodiment to which such modifications are added can also be included in the scope of the present invention.

In the aforementioned embodiments, the mode, in which the electrolyte membrane 110 and the reduction electrode 120 contain ionomers having protonic conductivity, has been described as an example, but they may contain ionomers having hydroxy ion conductivity.

In Embodiment 2, the reference electrode 112 is installed on the electrolyte membrane 110 in one electrode unit 100, but the reference electrode 112 may be installed on the electrolyte membranes 110 of a plurality of the electrode units 100. In this case, the potential difference $OV_{CA}$ between the reference electrode 112 and the corresponding reduction electrode 120 is detected by the voltage detection unit 114, so that the voltage $V_{CA}$ is calculated by using the average of the detected multiple potential differences $\Delta V_{CA}$. Thereby, the voltage VA can be adjusted to be within a more appropriate range, when a variation in the potentials is caused among the electrode units 100.

DESCRIPTION OF THE REFERENCE NUMERALS

| 10 | ELECTROCHEMICAL REDUCTION DEVICE |
|---|---|
| 20 | POWER CONTROL UNIT |
| 30 | ORGANIC MATERIAL STORAGE TANK |
| 36 | HYDROGEN GAS GENERATION AMOUNT MEASURING UNIT |
| 40 | WATER STORAGE TANK |
| 50 | GAS-WATER SEPARATION UNIT |
| 52 | GAS-LIQUID SEPARATION UNIT |
| 100 | ELECTRODE UNIT |
| 112 | REFERENCE ELECTRODE |
| 114 | VOLTAGE DETECTION UNIT |
| 110 | ELECTROLYTE MEMBRANE |
| 120 | REDUCTION ELECTRODE |
| 130 | OXYGEN EVOLVING ELECTRODE |
| 140A, 140B | LIQUID DIFFUSION LAYER |
| 150A, 150B | SEPARATOR |
| 200 | ELECTRODE UNIT ASSEMBLY |
| 210 | HYDROGEN GAS RECOVERY UNIT |

INDUSTRIAL APPLICABILITY

The present invention can be used in a technique for electrochemically producing a hydride of an aromatic hydrocarbon compound or a nitrogen-containing heterocyclic aromatic compound.

**Claims**

1. An electrochemical reduction device comprising:

an electrolyte membrane having ion conductivity;
an electrode unit including both a reduction electrode that is provided on one side of the electrolyte membrane and contains a reduction catalyst for hydrogenating at least one benzene ring of an aromatic hydrocarbon compound or a nitrogen-containing heterocyclic aromatic compound, and an oxygen evolving electrode provided on the other side of the electrolyte membrane;
a power control unit that applies a voltage Va between the reduction electrode and the oxygen evolving electrode such that the reduction electrode has an electronegative potential and the oxygen evolving electrode has an electropositive potential;
hydrogen gas generation amount measuring unit that measures a generation amount F1 of hydrogen gas generated per unit time of an electrolysis reaction of water that competes with a hydrogenation reaction of at least one benzene ring of the aromatic hydrocarbon compound or the nitrogen-containing heterocyclic aromatic compound; and
a control unit that releases, when the hydrogen gas generation amount F1 is larger than an acceptable upper limit F0 of a hydrogen gas generation amount in the electrode unit, the application of a voltage by the power control unit.

2. The electrochemical reduction device according to claim 1 further comprising:

a reference electrode that is arranged to contact the electrolyte membrane and to be electrically isolated from the reduction electrode and the oxygen evolving electrode and that is held at a reference electrode potential $V_{Ref}$; and
a voltage detection unit that detects a potential difference $\Delta V_{CA}$ between the reference electrode and the reduction electrode, wherein
the control unit measures a potential $V_{CA}$ in the reduction electrode based on the potential difference $\Delta V_{CA}$ and the reference electrode potential $V_{Ref}$.

3. An electrochemical reduction device comprising:

an electrolyte membrane having ion conductivity;
an electrode unit assembly in which a plurality of electrode units are connected in series with each other, the each electrode unit including both a reduction electrode that is provided on one side of the electrolyte membrane and contains a reduction catalyst for hydrogenating at least one benzene ring of an aromatic hydrocarbon compound or a nitrogen-containing heterocyclic aromatic compound, and an oxygen evolving electrode provided on the other side of the electrolyte membrane;
a power control unit that applies a voltage VA between a positive electrode terminal and a negative electrode terminal of the electrode unit assembly such that the reduction electrode of the each electrode unit has an electronegative potential and an oxygen evolving electrode thereof has an electropositive potential;
hydrogen gas generation amount measuring unit that measures, in the whole electrode units, a generation amount F1' of hydrogen gas generated per unit time of an electrolysis reaction of water that competes with a hydrogenation reaction of at least one benzene ring of the aromatic hydrocarbon compound or the nitrogen-containing heterocyclic aromatic compound; and
a control unit that releases, when the hydrogen gas generation amount F1' is larger than an acceptable upper limit F0 × N (wherein F0 represents an acceptable upper limit of a hydrogen gas generation amount per one of the electrode units, and N the number of the electrode units), the application of a voltage by the power control unit.

4. The electrochemical reduction device according to claim 3 further comprising:

a reference electrode that is arranged to contact the electrolyte membrane of any one of the electrode units included in the electrode unit assembly and to be electrically isolated from the reduction electrode and the oxygen evolving electrode of the electrode unit; and
a voltage detection unit that detects a potential difference $\Delta V_{CA}$ between the reference electrode and the reduction electrode of the electrode unit, wherein
the control unit measures a potential $V_{CA}$ in the reduction electrode of the electrode unit based on the potential difference $\Delta V_{CA}$ and the reference electrode potential $V_{Ref}$.

5. A method of manufacturing a hydride of an aromatic hydrocarbon compound or a nitrogen-containing heterocyclic aromatic compound, comprising:

using the electrochemical reduction device of any one of claims 1 to 4;
introducing an aromatic hydrocarbon compound or a nitrogen-containing heterocyclic aromatic compound into the reduction electrode side of the electrode unit;
circulating water or humidified gas to the oxygen evolving electrode side; and
producing a hydride of the aromatic hydrocarbon compound or the nitrogen-containing heterocyclic aromatic compound introduced into the reduction electrode side.

6. The method of manufacturing a hydride of an aromatic hydrocarbon compound or a nitrogen-containing heterocyclic aromatic compound according to claim 5, wherein
the aromatic compound or the nitrogen-containing heterocyclic aromatic compound to be introduced into the reduction electrode side is introduced into the reduction electrode side in a liquid state at a reaction temperature.

FIG.1

FIG.2

FIG.3

```
                    ┌─────────────┐
                    │    START    │
                    └──────┬──────┘
                           │
              ┌────────────┴────────────┐
              │  SETTING OF V_CA        │ ～ S10
              │  (TARGET VALUE)         │
              └────────────┬────────────┘
                           │
              ┌────────────┴────────────┐
              │  DETECTION OF ΔV_CA     │ ～ S20
              └────────────┬────────────┘
                           │
              ┌────────────┴────────────┐
              │  CALCULATION OF V_CA    │ ～ S30
              └────────────┬────────────┘
                           │
```

$|V_{CA}$ (ACTUALLY MEASURED VALUE) $- V_{CA}$ (TARGET VALUE)$| \leq$ ACCEPTABLE VALUE AND $V_{HER} - 20$ mV $\leq V_{CA}$ (ACTUALLY MEASURED VALUE) $\leq V_{TRR}$ SATISFIED? — S40

yes

no

ADJUSTMENT OF Va — S50

MEASUREMENT OF HYDROGEN GAS GENERATION AMOUNT F1 — S60

HYDROGEN GAS GENERATION AMOUNT F1 $\leq$ ACCEPTABLE VALUE F0 SATISFIED? — S70

yes

no — S80

STOPPING OF ELECTRODE REACTIONS

END

FIG.4

FIG.5

36

HYDROGEN GAS
GENERATION
AMOUNT
MEASURING UNIT

210

HYDROGEN GAS
RECOVERY UNIT

37

52

35    H2

33

H2

31

## INTERNATIONAL SEARCH REPORT

| International application No. |
|---|
| PCT/JP2013/004069 |

A.   CLASSIFICATION OF SUBJECT MATTER
*C25B9/00*(2006.01)i, *C25B1/04*(2006.01)i, *C25B3/04*(2006.01)i, *C25B9/10*
(2006.01)i, *C25B11/08*(2006.01)i, *C25B15/02*(2006.01)i

According to International Patent Classification (IPC) or to both national classification and IPC

B.   FIELDS SEARCHED

Minimum documentation searched (classification system followed by classification symbols)
C25B9/00, C25B1/04, C25B3/04, C25B9/10, C25B11/08, C25B15/02

Documentation searched other than minimum documentation to the extent that such documents are included in the fields searched
Jitsuyo Shinan Koho        1922–1996   Jitsuyo Shinan Toroku Koho   1996–2013
Kokai Jitsuyo Shinan Koho   1971–2013   Toroku Jitsuyo Shinan Koho   1994–2013

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y | JP 2009-7647 A  (Hitachi, Ltd.),<br>15 January 2009 (15.01.2009),<br>paragraphs [0014] to [0045]; fig. 1, 2<br>& US 2009/0000574 A1    & DE 102008030575 A<br>& CN 101333667 A | 1-6 |
| Y | JP 9-184086 A  (Permelec Electrode Ltd.),<br>15 July 1997 (15.07.1997),<br>paragraphs [0007] to [0025]; fig. 1, 3<br>(Family: none) | 1-6 |
| Y | JP 2005-213620 A  (Mitsubishi Heavy Industries,<br>Ltd.),<br>11 August 2005 (11.08.2005),<br>paragraphs [0011], [0020], [0024]<br>(Family: none) | 1-6 |

| ☒   Further documents are listed in the continuation of Box C. | ☐   See patent family annex. |
|---|---|

\*    Special categories of cited documents:
"A"   document defining the general state of the art which is not considered    to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search<br>    25 September, 2013 (25.09.13) | Date of mailing of the international search report<br>    08 October, 2013 (08.10.13) |
|---|---|
| Name and mailing address of the ISA/<br>   Japanese Patent Office | Authorized officer |
| Facsimile No. | Telephone No. |

Form PCT/ISA/210 (second sheet) (July 2009)

18

**INTERNATIONAL SEARCH REPORT**

International application No.

PCT/JP2013/004069

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2008-202142 A  (Samsung Electro-Mechanics Co., Ltd.), 04 September 2008 (04.09.2008), paragraphs [0084] to [0088]; fig. 5 & US 2008/0199744 A1    & EP 1965459 A1 & KR 10-2008-0077893 A  & CA 2621600 A | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003045449 A
- JP 2005126288 A
- JP 2005239479 A

**Non-patent literature cited in the description**

- **MASARU ICHIKAWA.** *J. Jpn. Inst. Energy,* 2006, vol. 85, 517